(19) Europäisches Patentamt / European Patent Office / Office européen des brevets

(11) **EP 4 674 872 A1**

(12) **EUROPEAN PATENT APPLICATION**

(43) Date of publication:
**07.01.2026 Bulletin 2026/02**

(21) Application number: **24186248.1**

(22) Date of filing: **03.07.2024**

(51) International Patent Classification (IPC):
**C08F 8/50** (2006.01) **C08F 110/06** (2006.01)
**C08K 5/13** (2006.01) **C08K 5/14** (2006.01)
**C08K 5/134** (2006.01) **C08K 5/00** (2006.01)

(52) Cooperative Patent Classification (CPC):
(C-Sets available)
**C08F 8/50** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Lummus Novolen Technology GmbH 68165 Mannheim (DE)**

(72) Inventors:
• **Sinner, Angela**
**68165 Mannheim (DE)**
• **Räntzsch, Volker Andreas**
**68165 Mannheim (DE)**

(74) Representative: **Osha BWB
2, rue de la Paix
75002 Paris (FR)**

(54) **PROPYLENE POLYMER COMPOSITIONS WITH IMPROVED RHEOLOGICAL AND PHYSICAL PROPERTIES AND METHOD FOR PRODUCING THE SAME**

(57) The disclosure relates to a method for producing a propylene polymer composition, comprising melt processing a propylene polymer in the presence of a composition comprising at least one hydrogen donor comprising a di-substituted p-cresol derivative, at least one peroxide comprising a peroxydicarbonate, and at least one polymer additive comprising at least one antioxidant. The melt processing is performed under inert conditions. The disclosure further relates to embodiments of propylene polymer compositions.

FIG. 2

**(Cont. next page)**

EP 4 674 872 A1

(52) Cooperative Patent Classification (CPC): (Cont.)

C-Sets
**C08F 110/06, C08F 4/6465;**
**C08F 110/06, C08F 4/651;**
**C08K 5/005, C08L 23/12;**
**C08K 5/098, C08L 23/12;**
**C08K 5/13, C08L 23/12;**
**C08K 5/134, C08L 23/12;**
**C08K 5/14, C08L 23/12;**
**C08K 5/526, C08L 23/12;**
C08F 110/06, C08F 2500/11, C08F 2500/12,
C08F 2500/15, C08F 2500/17, C08F 2500/30,
C08F 2500/35

**Description**

Technical Field

The present disclosure relates to a propylene polymer composition having improved sagging resistance, in particular at low draw ratio, without impairing physical properties, including stiffness, and to a method for producing the same.

The propylene polymer composition is suitable for a number of applications, including thermoforming applications, blow molding applications and foaming applications. Furthermore, the propylene polymer composition may also be used in other applications and processes.

Background Art

Propylene polymers are produced using petrochemical technologies, such as, for example, slurry or gas phase processes (Pasquini, N., Polypropylene Handbook, 2nd Ed., Hanser, 2005). For the production of propylene homopolymers and random copolymers of propylene with other alpha-olefins, a plant set-up including at least one polymerization reactor may be used. For the production of propylene impact copolymers, also known as heterophasic copolymers, a minimum of two polymerization reactors in a cascade arrangement may be used. For the production of propylene polymers, different catalysts may be used, including Ziegler-Natta or metallocene catalysts. In the case of Ziegler-Natta catalysts, different internal donors have been developed, such as phthalate-, diether-, succinate-, citraconate-, or further diester-based donors (Paulik, Christian, et al. Macromol. Chem. Phys. 2021, 222, 2100302). Internal donors may have a strong influence on the properties of the polymers produced, as internal donors impact the achievable degree of isotacticity, the chemical composition distribution, the molecular weight distribution, and the incorporation of comonomers. Most widely used internal donors are phthalate- and diether-based, as these internal donors are available globally from multiple sources and are suitable for a broad range of applications. Propylene polymers produced with such catalysts, however, exhibit rather low melt strengths, i.e., a low resistance to drawing, which is particularly disadvantageous when the propylene polymers are thermoformed, blow molded, or foamed.

Attempts to increase the melt strength of propylene polymers have been made by increasing the molecular mass, broadening the molecular weight distribution, and/or introducing long chain branches. Among these attempts, according to Pasquini, N., Polypropylene Handbook, 2nd Ed., Hanser, 2005, the most effective contribution to the melt strength increase appears to be the introduction of long chain branches, which can be generated by irradiating a propylene polymer chain or by using chemical free-radical initiators, *i.e.,* organic peroxides.

An example of modification of linear polypropylene by reaction with peroxydicarbonates in a twin screw extruder to obtain long chain branching is provided by A. D. Gotsis et al., Effect of long chain branching on the processability of polypropylene in thermoforming, Polymer Engineering and Science, May 2004, vol. 44, No. 5, 973 ff., which shows that melt strength, elasticity and strain hardening increase with the increase of the number of long chain branches on the main chain.

An example of treatment of propylene polymers with organic peroxides is described by WO 99/27007 A1. In particular, WO 99/27007 A1 describes an extrusion process for enhancing the melt strength of polypropylene, comprising mixing the polypropylene with at least one peroxydicarbonate, and reacting the polypropylene and peroxydicarbonate at a temperature between 150°C and 300°C. The resulting compositions, however, exhibit relatively low maximum melt strengths ($\leq$ 40 cN), which can be unsatisfactory in some applications.

Turning now to consider broadening the molecular weight distribution, while some improvements have been made by using polymers having broad molecular weight distributions, as described in WO 2016/126429A1, WO 2016/126430 A1, and WO 2016/164111 A1 (which refer to polypropylene having a "balanced melt strength"), these polymers are taught to be produced in solution or slurry processes having two or more reactors. These processes, however, are complex when compared to gas-phase processes performed in a single reactor.

In order to produce polymers having broad molecular weight distributions, the use of catalysts including non-phthalic internal donors has been described in WO 2015/200586 A1 and WO 2021/001175 A1. However, the proposed Ziegler-Natta succinate- or citraconate-containing catalysts are not widely available from multiple sources, and are not suitable for producing a wide range of polymers for different applications. Therefore, these prior art approaches based on non-phthalic internal donors require multiple industrial plants to switch frequently between multiple catalysts.

In the attempt to improve the melt strength of polymers having broad molecular weight distributions, the use of Vitamin E as alkyl radical scavenger during the treatment with peroxides has been proposed by WO 2016/126430 A1. However, the increase of melt strength turned out to be relatively small and at any rate insufficient to produce high quality articles by thermoforming, blow molding, and foaming.

Overall, even when prior art polymers are treated with compounds which may provide a somewhat increased melt strength, this increase is attained at the expenses of the draw ratio. As shown in Fig. 5 of WO 2016/126429 A1, and Fig. 3 of WO 2016/126430 A1, for example, high draw ratios appear to be unavoidable when melt strength is increased. As shown in Table 2 of WO 2021/001175 A1, a high melt strength, especially at low draw ratios, and a high stiffness were not attained.

In view of the above, there is still the need of developing methods for producing a propylene polymer in a simple manner, without necessarily needing multiple reactors, by subjecting the propylene polymer to a simple reactive processing, resulting in a propylene polymer which, once processed, has an increased melt strength, in particular at low draw ratios, while maintaining favorable physical properties.

Summary

The Applicant has surprisingly found that by using a composition comprising at least one peroxide comprising at least one selected peroxide *(i.e.,* a peroxydicarbonate), at least one selected hydrogen donor *(i.e.,* a hydrogen donor comprising a di-substituted p-cresol derivative), and at least one polymer additive comprising at least one antioxidant, and by contacting a propylene polymer with the composition under melt and inert conditions, a propylene polymer composition having a unique combination of properties can be obtained. The unique combination of properties comprises improved melt rheological properties, resulting, among others, in an increased melt strength at low draw ratios, in combination with enhanced physical properties, such as, for example, a high flexural modulus, and/or a high tensile strength, and/or a high Vicat softening temperature.

This unique combination of properties may be for example desirable in thermoforming applications, blow molding applications, and foaming applications, such as, for example, injection foaming applications.

In these applications, issues commonly shown by prior art propylene polymers, such as sagging in thermoforming applications, parison sag and low uniformity in blow molding applications, and low uniformity of cells in foaming applications, are successfully overcome by melt processing a propylene polymer in the presence of the above-mentioned composition under inert conditions.

Recently, the inventors tested compositions comprising at least one hydrogen donor comprising a di-substituted p-cresol derivative, at least one peroxide comprising a peroxydicarbonate, and at least one polymer additive comprising at least one antioxidant, in a melt processing of a propylene polymer and were surprised to find that, essentially regardless of the initial melt strength of the propylene polymer to be processed, which may be simply produced in a single reactor, the resulting propylene polymer compositions after processing worked significantly and unexpectedly better, not only in terms of melt strength, in particular at low draw ratios, but also in terms of a number of physical properties, than would have been predicted. The better physical properties include a high flexural modulus, and/or a high tensile strength, and/or a high Vicat softening temperature.

As an example of what would have been predicted based on the common general knowledge before the inventors' tests, Zweifel, H., Plastics Additives Handbook, 6th Ed., Hanser, 2009, indicates that sterically hindered phenols are powerful stabilizers for the melt processing of polyolefins, and that the effectiveness of the sterically hindered phenols depends on the number of phenolic groups that serve as H-donors and on sterical hindrance in the 2- and 6-position. This document shows that 2,6 di-tert-butyl-p-cresol has a lower stabilization efficiency than vitamin E because the MFR value in the presence of 2,6 di-tert-butyl-p-cresol after 1, 3, and 5 extrusions is always higher than the MFR value in the presence of vitamin E after 1, 3, and 5 extrusions. Thus, 2,6 di-tert-butyl-p-cresol is taught to be less effective than vitamin E in preventing the decomposition of a polymer during melt processing.

According to an aspect thereof, one or more embodiments of the present disclosure relate to a method for producing a propylene polymer composition. The method may comprise melt processing a propylene polymer in the presence of a composition comprising at least one hydrogen donor, at least one peroxide, and at least one polymer additive. The at least one hydrogen donor may comprise a di-substituted p-cresol derivative. The at least one peroxide may comprise a peroxydicarbonate. The at least one polymer additive may comprise at least one antioxidant. The melt processing may be performed under inert conditions.

According to a further aspect thereof, one or more embodiments of the present disclosure relate to a propylene polymer composition. The propylene polymer composition may be obtained by the above-mentioned method. The propylene polymer composition may comprise from 95.0 to 99.9 % by weight of one or more propylene polymers, from 50 to 1000 ppm of one or more hydrogen donors comprising a di-substituted p-cresol derivative, and from 200 to 49000 ppm of one or more polymer additives comprising at least one antioxidant. The propylene polymer composition may have a performance-to-MFR ratio ≥ 3.9.

The performance-to-MFR ratio is defined by the following equation (1):

$$\text{Performance} - \text{to} - \text{MFR ratio} = \frac{Flexural\ Modulus\ [MPa] \times F_{norm}(V=2)[-] \times F_{max}[cN]}{10000 \times MFR\ \left[\frac{g}{10min}\right]} \quad (1)$$

The flexural modulus is determined on injection-molded test specimen conditioned for 7 days at 23°C and 50% relative humidity, in accordance with ISO 178.

$F_{norm}$ is the normalized melt strength determined on a capillary rheometer in combination with a Rheotens apparatus (e.g., a Rheotens apparatus manufactured by Göttfert Werkstoff-Prüfmaschinen GmbH, Germany) by extruding a polymer strand at 190°C through a capillary die and by drawing the extruded strand until the polymer strand breaks. $F_{norm}$ is defined by the following equation (2):

$$F_{norm}\ [-] = \frac{F(V) - F_{min}}{F_{max} - F_{min}} \qquad (2)$$

where $F_{min}$ and $F_{max}$ are the minimum and maximum melt strength values, respectively, $F(V)$ is the melt strength.

V is the draw ratio defined as $V = v/v_0$, $v_0$ is the initial take-up velocity, $v$ is the applied take-up velocity.

MFR is the melt mass-flow rate as determined in accordance with ISO 1133 at 230°C and a load of 2.16 kg.

The "MFR" as used in the present description and the following claims, unless otherwise indicated, is determined in accordance with ISO 1133 at 230°C and a load of 2.16 kg.

In view of the definition of the performance-to-MFR ratio, propylene polymer compositions having high values of the performance-to-MFR ratio, *i.e.,* at least equal to 3.9, exhibit a high flexural modulus, a high normalized melt strength $F_{norm}$ at low draw ratios, and a high maximum melt strengths $F_{max}$. Different propylene polymer compositions may be compared based on the performance-to-MFR ratio because the numerator of formula (1) is divided by the melt flow rate value and a scaling factor *(i.e.,* 10000).

According to a further aspect thereof, one or more embodiments of the present disclosure relate to a propylene polymer composition, which may be for example obtained by the above-mentioned method. The propylene polymer composition may comprise from 95.0 to 99.9 % by weight of one or more propylene polymers, from 50 to 1000 ppm of one or more hydrogen donors comprising a di-substituted p-cresol derivative, and from 200 to 49000 ppm of one or more polymer additives comprising at least one antioxidant. The propylene polymer composition may have:

a g' $\leq$ 1.0,
a PI $\geq$ 6.0, and
a flexural modulus $\geq$ 1750 Pa,
where

g' is the branching index determined by performing calibrated GPC measurements of polymer solutions in 1,2-dichlorobenzene at 145°C,
g' is defined by the following equation (3):

$$g'\ [-] = \frac{IV}{K \times M_v^{\alpha}} \qquad (3)$$

where

IV is the intrinsic viscosity,
K = 0.000262 dl/g,
$M_v$ is the viscosity average molecular weight, and
$\alpha$ = 0.705.

PI is the rheological polydispersity index determined by performing rheological oscillatory frequency sweep experiments on compression-molded disks using a parallel-plate geometry at 210°C. PI is defined by the following equation (4):

$$PI\ [-] = \frac{10^5 \text{Pa}}{G_c} \qquad (4)$$

where

Gc is the cross-over modulus Gc = G' = G" determined by a least squares fit,
G' is the storage modulus, and
G" is the loss modulus.

The flexural modulus is determined on injection-molded test specimen conditioned for 7 days at 23°C and 50% relative humidity, in accordance with ISO 178.

According to further aspects thereof, one or more embodiments of the present disclosure relate to a use of any one of the above mentioned propylene polymer compositions for reducing sagging in thermoformed articles, reducing parison sagging and increasing uniformity in blow-molded articles, and increasing uniformity of cells in foamed articles.

According to a further aspect thereof, one or more embodiments of the present disclosure relate to an article comprising any one of the above mentioned propylene polymer compositions.

Further embodiments are defined in the dependent claims.

Brief description of the drawings

Figure 1 shows temperature zones of a reactive extrusion used in a method in accordance with one or more embodiments.

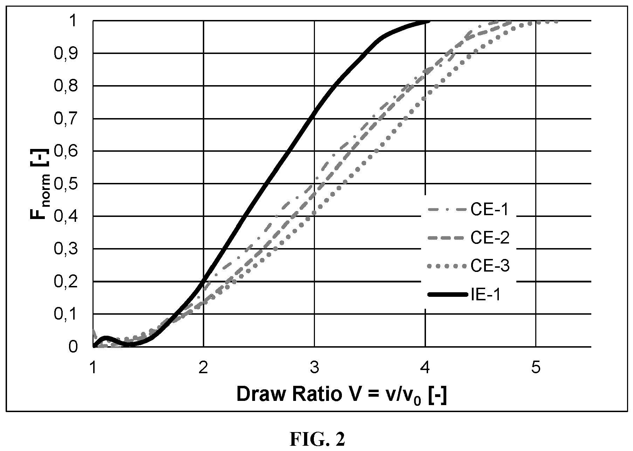

Figure 2 shows elongational rheology data from Göttfert Rheotens experiments on propylene polymer compositions in accordance with one or more embodiments and comparative examples.

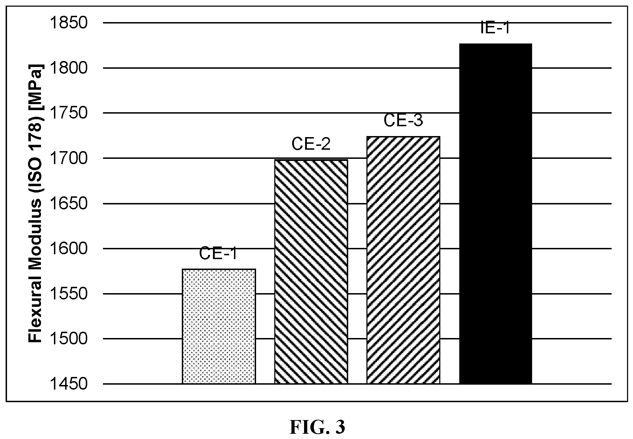

Figure 3 shows the flexural modulus of propylene polymer compositions in accordance with one or more embodiments and comparative examples.

Description of embodiments

One or more embodiments provide a method for producing a propylene polymer composition, comprising melt processing a propylene polymer in the presence of a composition comprising at least one hydrogen donor comprising a di-substituted p-cresol derivative, at least one peroxide comprising a peroxydicarbonate, and at least one polymer additive comprising at least one antioxidant. The melt processing is performed under inert conditions.

As used herein, "polypropylene" refers to a polymer containing greater than 50 mole percent propylene monomer.

According to one or more embodiments, the propylene polymer is selected from the group comprising propylene homopolymers and copolymers of propylene and one or more comonomers.

According to one or more embodiments, the propylene polymer is a propylene homopolymer.

According to one or more embodiments, the comonomers that may be used to form the propylene copolymer may include one or more alpha-olefins.

According to one or more embodiments, the comonomers may include ethylene and/or a C4 to C20 alpha-olefin, such as 1-butene, 3-methyl-1-butene, 4-methyl-1-pentene, 3-methyl-1-pentene, 1-heptene, 1-hexene, 1-octene, 1-decene, 1-dodecene, and styrene, among others, including their halogenated counterparts, as well as conjugated or non-conjugated, straight chain, branched, or cyclic C4 to C20 dienes, such as butadiene, norbornene, pentadienes or cyclopentadienes, and 1,4-hexadiene, 1,6-octadiene, 1,7-octadiene, 1,9-decadiene, 5-methyl-1,4-hexadiene, 3,7-dimethyl-1,6-octadiene, and 3,7-dimethyl-1,7-octadiene, among others.

According to one or more embodiments, the propylene polymer is obtained by performing a propylene polymerization in a single reactor in the presence of a Ziegler-Natta catalyst.

According to one or more embodiments, the propylene polymer is obtained by performing a propylene polymerization in one or more gas-phase reactors.

According to one or more embodiments, the propylene polymer is obtained by performing a propylene polymerization in a single gas-phase reactor, such as a vertically-stirred gas phase reactor, for example of the Novolen® type.

According to one or more embodiments, the propylene polymer may be obtained by using a stereospecific $MgCl_2$-xROH-supported Ziegler-Natta catalyst containing an internal donor, such as a phthalate, *e.g.,* a diisobutyl phthalate (DIBP), or a diether, e.g., 2-isopropyl-2-isopentyl-1,3 dimethoxypropane, for example at 30 bar and 80°C, and by optionally using an external donor, such as an alkoxy silane, e.g., isobutyl(isopropyl) dimethoxysilane, cyclohexylmethyl-dimethoxysilane, or dicyclopentyldimethoxysilane, to achieve high isotacticity levels.

As used herein, the "melt processing" refers to a reactive melt processing. Indeed, the presence of the at least one peroxide modifies the propylene polymer, and in particular the rheology thereof, thus making the processed propylene polymer suitable for selected product applications.

According to one or more embodiments, the melt processing is performed at a temperature lower than 300°C, for example lower than 280°C, 260°C, 240°C, 220°C, 210°C, 207°C, or 206°C, and, according to one or more embodiments combinable with any of the upper limits indicated above, at a temperature higher than 170°C, for example higher than 180°C, 185°C, 190°C, or 194°C.

According to one or more embodiments, the method comprises feeding the composition in a melt processing device before and/or during the melt processing of the propylene polymer.

According to one or more embodiments, the method may comprise feeding the composition and the propylene polymer in a melt processing device, mixing the propylene polymer and the composition to obtain a mixture, and melting the mixture.

According to one or more embodiments, the method comprises feeding the composition after the melt processing of the propylene polymer. In other words, the composition may be fed in the melt processing device when the propylene polymer is at least partially melt processed.

According to one or more embodiments, the melt processing comprises any one of extruding, mixing, blending, calendaring, and combinations thereof.

According to one or more embodiments, extruding comprises extruding the propylene polymer in the presence of the composition (for example, the molten mixture as defined above) through a die.

According to one or more embodiments, the die may comprise a round die, a slit die, a ring die, or a spiral mandrel die.

According to one or more embodiments, the die may be a round die.

According to one or more embodiments, the inert conditions include an essential absence of oxygen, such as lower than 10000 ppm, for example lower than 5000 ppm, or lower than 3000 ppm.

According to one or more embodiments, the inert conditions include a presence of an inert gas, such as for example nitrogen, argon, or carbon dioxide.

According to one or more embodiments, the method further comprises applying an under-atmospheric pressure, such as, for example, a vacuum set to 200-400 mbar, for example 250-350 mbar, or 280-320 mbar.

According to one or more embodiments, the method further comprises cooling the melt processed propylene polymer composition (*e.g.*, the extruded molten mixture) by means a cooling device.

According to one or more embodiments, the cooling device comprises a water-cooled device, an air-cooled device, or an oil-cooled device.

According to one or more embodiments, the cooling device is a water-cooled device.

According to one or more embodiments, the method further comprises forming the cooled propylene polymer composition (e.g., the cooled mixture) into pellets.

According to one or more embodiments, forming may be performed by cutting a polymer strand, for example by means of a cutting device.

According to one or more embodiments, the cutting device comprises a granulator, a blade, or a shredder.

According to one or more embodiments, the cutting device is a granulator.

According to one or more embodiments, the method further comprises collecting the pellets.

According to one or more embodiments, the composition may comprise from 0.2 to 5.0% by weight, from 0.5 to 4.0% by weight, from 0.6 to 3.0% by weight, from 0.7 to 2.0% by weight, for example from 0.8 to 1.5% by weight, of one or more hydrogen donors comprising a di-substituted p-cresol derivative. These exemplary amounts of the one or more hydrogen donors, the following exemplary amounts of the at least one peroxide as well as each of the exemplary amounts of any other optional components of the composition are provided with respect to the total weight of the composition.

According to one or more embodiments, the di-substituted p-cresol derivative may comprise a 2,6 di-alkyl-substituted p-cresol derivative, such as, for example, 2,6 di-tert-butyl-p-cresol, 2,6-dicyclohexyl-p-cresol, or 2,6-di-tert-amyl-p-cresol, and combinations thereof.

According to one or more embodiments, the composition may comprise from 30 to 90% by weight, from 40 to 85% by weight, from 50 to 80% by weight, from 55 to 75% by weight, for example from 60 to 72% by weight, of at least one peroxide comprising a peroxydicarbonate.

According to one or more embodiments, the peroxydicarbonate may comprise dialkyl peroxydicarbonate, for example any one of dicetyl peroxydicarbonate, di myristyl peroxydicarbonate, or di sec-octyl peroxydicarbonate, and combinations thereof.

According to one or more embodiments, the composition may comprise from 5.0 to 65% by weight, from 11.5 to 54% by weight, from 17 to 43% by weight, from 22.5 to 40% by weight, for example from 27 to 37% by weight, of one or more polymer additives comprising at least one antioxidant.

According to one or more embodiments, the total concentration of the one or more hydrogen donors, the at least one peroxide, and the one or more polymer additives may add up to 100% by weight.

According to one or more embodiments, the at least one antioxidant is selected from the group comprising propionate-based phenolic antioxidants, amine antioxidants, phosphite antioxidants, phosphonite antioxidants, benzofuranone antioxidants, thiodipropionate antioxidants, acryloyl antioxidants, and combinations thereof.

According to one or more embodiments, the total concentration of the one or more hydrogen donors, the at least one peroxide, and the at least one antioxidant may add up to 100% by weight.

According to one or more embodiments, the total concentration of the one or more hydrogen donors, the at least one peroxide, and the at least one antioxidant may add up to less than 100%, such as, for example, up to 90% by weight, 91% by weight, 92% by weight, 93% by weight, or 94% by weight.

According to one or more embodiments, the one or more polymer additives may comprise, in addition to the one or more antioxidants, also a further polymer additive, such as, for example, one or more acid scavengers.

According to one or more embodiments, the one or more acid scavengers are selected from the group comprising metallic stearates, hydrotalcites, hydrocalumites, metallic oxides, metallic carbonates, and combinations thereof.

According to one or more embodiments, the composition may comprise from 0 to 10% by weight, from 1.0 to 10% by weight, from 1.5 to 9.0% by weight, from 2.0 to 8.0% by weight, from 2.5 to 7.0% by weight, for example from 3.0 to 6.0% by weight, of one or more acid scavengers.

One or more embodiments are directed to a propylene polymer composition obtained by any one of the embodiments of the above-mentioned method.

One or more embodiments are directed to a propylene polymer composition, which may be obtained by any one of the embodiments of the above-mentioned method, and which comprises from 95.0 to 99.9 % by weight of one or more propylene polymers, from 50 to 1000 ppm of one or more hydrogen donors comprising a di-substituted p-cresol derivative, and from 200 to 49000 ppm of one or more polymer additives comprising at least one antioxidant. These amounts of the one or more propylene polymers, and those of the one or more hydrogen donors and of one or more polymer additives as well as each of the exemplary amounts of these components and any other optional components of the propylene polymer composition are provided with respect to the total weight of the propylene polymer composition.

According to one or more embodiments, the propylene polymer composition either has a performance-to-MFR ratio $\geq$ 3.9 and/or has:

a g' $\leq$ 1.0,
a PI $\geq$ 6.0, and
a flexural modulus $\geq$ 1750 Pa.

The performance-to-MFR ratio is defined by the following equation (1):

$$\text{Performance} - \text{to} - \text{MFR ratio} = \frac{Flexural\ Modulus\ [MPa] \times F_{norm}(V=2)[-] \times F_{max}[cN]}{10000 \times MFR\left[\frac{g}{10min}\right]} \quad (1)$$

The flexural modulus is determined on injection-molded test specimen conditioned for 7 days at 23°C and 50% relative humidity, in accordance with ISO 178.

$F_{norm}$ is the normalized melt strength determined on a capillary rheometer in combination with a Rheotens apparatus (e.g., a Rheotens apparatus manufactured by Göttfert Werkstoff-Prüfmaschinen GmbH, Germany) by extruding a polymer strand at 190°C through a capillary die and by drawing the extruded strand until the polymer strand breaks. $F_{norm}$ is defined by the following equation (2):

$$F_{norm}\ [-] = \frac{F(V)-F_{min}}{F_{max}-F_{min}} \quad (2)$$

where $F_{min}$ and $F_{max}$ are the minimum and maximum melt strength values, respectively, F(V) is the melt strength, V is the draw ratio defined as $V = v/v_0$, $v_0$ is the initial take-up velocity, v is the applied take-up velocity.

MFR is the melt mass-flow rate as determined in accordance with ISO 1133 at 230°C and a load of 2.16 kg.

g' is the branching index determined by performing calibrated GPC measurements of polymer solutions in 1,2-dichlorobenzene at 145°C. g' is defined by the following equation (3):

$$g'\ [-] = \frac{IV}{K \times M_v^\alpha} \quad (3)$$

where

IV is the intrinsic viscosity,
K = 0.000262 dl/g,
$M_v$ is the viscosity average molecular weight, and
$\alpha$ = 0.705.

PI is the rheological polydispersity index determined by performing rheological oscillatory frequency sweep experiments on compression-molded disks using a parallel-plate geometry at 210°C. PI is defined by the following equation (4):

$$PI \: [\text{-}] = \frac{10^5 \text{Pa}}{G_c} \qquad (4)$$

where

Gc is the cross-over modulus Gc = G' = G" determined by a least squares fit,
G' is the storage modulus, and
G" is the loss modulus.

The flexural modulus is determined on injection-molded test specimen conditioned for 7 days at 23°C and 50% relative humidity, in accordance with ISO 178.

Unless indicated otherwise, all embodiments of the propylene polymer composition, including those described in the following and those defined in the dependent claims, are applicable both to the propylene polymer composition having a performance-to-MFR ratio $\geq$ 3.9 and to the propylene polymer composition having a g' $\leq$ 1.0, a PI $\geq$ 6.0, and a flexural modulus $\geq$ 1750 Pa. The same applies to the propylene polymer composition satisfying all these four conditions in combination.

According to one or more embodiments, the propylene polymer composition may comprise from 97.0 to 99.8% by weight, from 98.0 to 99.75% by weight, for example from 99.0 to 99.7% by weight, of one or more propylene polymers.

According to one or more embodiments, the propylene polymer composition may comprise from 80 to 900 ppm, from 90 to 500 ppm, from 100 to 400 ppm, for example from 120 to 200 ppm, of one or more hydrogen donors comprising a di-substituted p-cresol derivative.

According to one or more embodiments, the di-substituted p-cresol derivative comprises a 2,6 di-alkyl-substituted p-cresol derivative.

According to one or more embodiments, the 2,6 di-alkyl-substituted p-cresol derivative comprises 2,6 di-tert-butyl-p-cresol, 2,6-dicyclohexyl-p-cresol, or 2,6-di-tert-amyl-p-cresol, and combinations thereof.

According to one or more embodiments, the one or more polymer additives may be any one of the polymer additives described above with reference to embodiments of the method.

According to one or more embodiments, the propylene polymer composition may comprise from 350 to 29000 ppm, from 700 to 19000 ppm, from 1300 to 9000 ppm, for example from 3400 to 6900 ppm, of one or more polymer additives.

According to one or more embodiments, the propylene polymer composition may comprise from 200 to 49000 ppm, from 200 to 47000 ppm, from 200 to 40000 ppm, from 200 to 25000 ppm, from 500 to 15000 ppm, from 1000 to 7500 ppm, for example from 3000 to 5500 ppm, of one or more antioxidants.

According to one or more embodiments, the propylene polymer composition may comprise from 0 to 2000 ppm, from 100 to 2000 ppm, from 150 to 1750 ppm, from 200 to 1500 ppm, from 300 to 1000 ppm, for example from 400 to 900 ppm, of one or more acid scavengers.

According to one or more embodiments, the propylene polymer composition may have a performance-to-MFR ratio from 3.9 to 25, for example from 4.0 to 15, from 4.2 to 8.0, or from 4.5 to 6.5.

According to one or more embodiments, the propylene polymer composition may have a g' from 0 to 1.0, from 0.1 to 0.96, from 0.2 to 0.90, from 0.3 to 0.85, or from 0.4 to 0.83.

According to one or more embodiments, the propylene polymer composition may have a PI from 7.0 to 12.0, from 8.1 to 10.0, or from 8.1 to 9.0.

According to one or more embodiments, the flexural modulus of the propylene polymer composition may be from 1750 MPa to 3000 MPa, for example from 1770 to 2500 MPa, from 1790 to 2000 MPa, or from 1800 to 1900 MPa.

According to one or more embodiments, the MFR of the propylene polymer composition may be from 0.1 g/10 min to 15 g/10 min, for example from 0.1 to 15 g/10 min, from 0.2 to 5.0 g/10 min, from 0.3 to 1.5 g/10 min, or from 0.4 to 1.0 g/10 min.

According to one or more embodiments, the propylene polymer composition may have a degree of shear-thinning (PDR) from 129 to 200, for example from 130 to 180, from 132 to 160, or from 134 to 150.

According to one or more embodiments, the viscosity average molecular weights ($M_v$) of the propylene polymer composition may be from 100000 to 900000 g/mol, for example from 200000 to 700000 g/mol, from 300000 to 500000 g/mol, or from 380000 to 420000 g/mol.

According to one or more embodiments, the intrinsic viscosity of the propylene polymer composition may be from 1.00 to 5.00 dl/g, for example from 1.50 to 3.00 dl/g, from 1.80 to 2.50 dl/g, or from 1.89 to 2.20 dl/g.

According to one or more embodiments, the propylene polymer composition may have a tensile strength from 15 to 50 MPa, for example from 20 to 50 MPa, from 35 to 45 MPa, or from 38 to 42 MPa.

According to one or more embodiments, the propylene polymer composition may have a Vicat softening temperature (VST) from 155.4 to 180.0°C, for example from 156.0 to 170.0°C, from 156.5 to 165.0°C, or from 157.0 to 162.0°C.

One or more embodiments provide a use of the propylene polymer composition according to any one of the embodiments disclosed herein for reducing sagging in thermoformed articles.

One or more embodiments provide a use of the propylene polymer composition according to any one of the embodiments disclosed herein for reducing parison sagging and increasing uniformity in blow-molded articles.

One or more embodiments provide a use of the propylene polymer composition according to any one of the embodiments disclosed herein for increasing uniformity of cells in foamed articles.

One or more embodiments provide an article comprising the propylene polymer composition according to any one of the embodiments disclosed herein.

Detailed examples

The following examples of methods for producing a propylene polymer composition and of propylene polymer compositions are given for illustrating but not limiting purposes, and the improved combination of properties of a propylene polymer composition in accordance with embodiments of the present disclosure.

The examples show the improved combination of properties of a propylene polymer composition produced by a method according to embodiments of the present disclosure compared to conventional methods using only a peroxydicarbonate and to conventional methods using only peroxydicarbonate with vitamin E as alkyl radical scavenger. The examples show a propylene polymer composition, which is produced in accordance with embodiments of the method of the present disclosure, and has an increased melt strength at low draw ratios, and a unique combination of favorable physical properties.

In the following examples, propylene polymer compositions will be described comprising a propylene homopolymer. However, propylene polymers different from this exemplary polymer may be produced by the method of the present disclosure. Also, compositions to be used in the method will be described comprising one hydrogen donor comprising a di-substituted p-cresol derivative, one peroxydicarbonate, and three polymer additives comprising two antioxidants and one acid scavenger. However, a plurality of hydrogen donors, and/or a plurality of peroxydicarbonates, and/or one, two, or more than three polymer additives may be used in accordance with one or more embodiments of the method of the present disclosure. Further, additional conventional polymer additives (such as, for example, antistatic agents, slip agents, antiblocking agents, mold release agents, etc.) may be used in accordance with one or more embodiments of the method of the present disclosure.

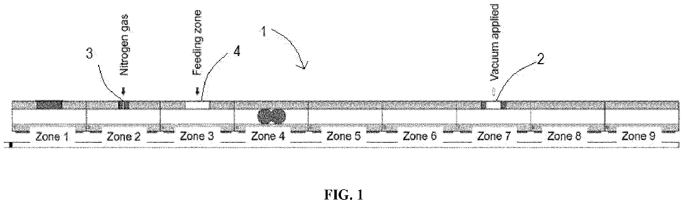

With reference to Fig. 1, each exemplary composition at a predetermined concentration was fed with exemplary polymer powder by gravimetric feeders into a feeding zone 3 of a melt processing device 1 comprising a Leistritz ZSE 18 HPe twin screw extruder. The extruder operated at a screw speed of 600 rpm and under vacuum (300 mbar) applied in a vent port 2 located in a zone 7 of the extruder. However, vacuum is optional and is not essential to obtain the improved combination of propylene polymers properties. Together with the composition and the propylene polymers pellets, additional additives may be also fed into the extruder.

Nitrogen gas was fed to a port 3 located in a zone 2, to a sleeve connecting port 4 in a zone 3 with gravimetric feeders (not shown), and to gravimetric feeders (not shown) to achieve inert atmosphere conditions, i.e., in the essential absence of oxygen within the propylene polymer processing devices and auxiliary equipment (including feeders, hoppers, lines, or tubes), by preventing oxygen from entering the melt processing device 1 and auxiliary equipment thereof and by applying a flow of nitrogen.

The exemplary propylene polymer and the composition were extruded in the extruder at an extrusion temperature which was varied along the length of the extruder. In particular, the extrusion temperature was adjusted to 195°C at the extruder feed zone and increased up to 205°C at the extruder die zone according to the following profile in zones 1-9 of the extruder: $T_{zone1}$: ambient temperature, $T_{zone2}$: ambient temperature, $T_{zone3}$: 195°C, $T_{zone4}$: 205°C, $T_{zone5}$: 205°C, $T_{zone6}$: 205°C, $T_{zone7}$: 205°C, $T_{zone8}$: 205°C, $T_{zone9}$ (*i.e.,* die zone): 205°C.

The propylene homopolymer and the compositions as detailed in Table 1 were mixed by the screw of the extruder and molten, thus obtaining molten mixtures. During the transportation of the propylene polymer through the extruder, propylene polymer reaction occurred. Volatile compounds were removed during the extrusion by venting the extruder applying under-atmospheric pressure.

The molten mixtures were extruded through the die, which was a 2 x 3 mm round die, then cooled in a water bath of 1.0 m operated with cold tap water, and cut into pellets using a Primo 60 E granulator operated at 25% speed. Finally, the pellets were collected in bags.

As shown in the following, the method according to embodiments of the present disclosure resulted in final propylene polymer pellets having properties suitable for thermoforming applications, blow molding applications and foaming applications.

The following methods were used to determine the properties reported in the examples and in any of the embodiments of the present disclosure referring to these properties.

Melt Flow Rate (MFR) is the MFR measured according to ISO 1133 with a load of 2.16 kg at 230 °C using a Melt Flow @on (Emmeram Karg Industrietechnik, Germany).

Peak melting temperatures $T_M$ [°C] (equivalent to $T_{pm}$) and peak crystallization temperatures $T_C$ [°C] (equivalent to $T_{pc}$) are determined according to ISO 11357-3 using a DSC822e (Mettler Toledo, Switzerland). The heating and cooling protocol is as follows: [1] 50 to 200°C at +10 K/min, [2] 200°C for 5 min, [3] 200 to 50°C, at -10 K/min, [4] 50°C for 5 min, [5] 50 to 200°C at +10 K/min. For the peak melting temperature $T_M$, the second heating cycle is evaluated.

Xylene soluble content XS [wt%] is determined based on ISO 16152 with a modified temperature profile. For the analysis, 5 grams of polymer sample were added to a 1000 ml round bottom flask and combined with 450 ml of ortho-xylene. The polymer / xylene mixture is heated to 140±2°C under reflux and kept at that temperature for 60 min until a clear solution was obtained. The flask is cooled down to 130°C until refluxing stops. Subsequently, the mixture is agitated and cooled using an ice bath for a minimum of 20 min until 5°C is reached and a gel precipitates. The ice bath is then removed and replaced with a water bath maintained at 23°C. The flask remains in the water bath under constant agitation for 30 minutes and is slowly reheated to room temperature. The mixture is then poured through a filter and the solvent was collected. The precipitated polymer gel is washed with an additional 50 ml of clean xylene. An aliquot of 200 ml of the filtrate is taken, and the solvent is removed by evaporation until constant weight is obtained.

Calculation of the xylene soluble content XS [wt%]:

$$XS\ [wt\%] = \frac{(m_{XS} - m_{RBF}) \times V_{XYL}}{m_P \times V_{SAMPLE}} \times 100wt\%$$

$$V_{XYL} = \frac{m_{XYL}}{\rho_{XYL}}$$

where $m_{XS}$: mass (g) of 250 ml round bottom flask with sample, $m_{RBF}$: mass (g) of 250 ml empty round bottom flask, $V_{XYL}$: volume (ml) of total xylene used, $m_P$: mass (g) of polymer, $V_{SAMPLE}$: volume of xylene sample in 250 ml round bottom flask, $m_{XYL}$: mass (g) of total xylene used, $\rho_{XYL}$: density (g/ml) of xylene used.

Multipurpose test specimen (type A1) for physical testing is prepared according to ISO 19069-2 and ISO 20753. The test specimen is conditioned for 7 days at 23°C and 50% relative humidity prior to testing.

Flexural modulus values [MPa] are determined on the conditioned test specimen according to ISO 178 using a TIRA-Test 28025 E6 (TIRA GmbH, Germany).

Tensile strengths [MPa] are determined on the conditioned test specimen according to ISO 527-2 using a smarTens 010 (Emmeram Karg Industrietechnik, Germany).

Vicat softening temperatures VST [°C] is determined on the conditioned test specimen according to ISO 306, method A50, using a force of 10 N, a heating rate of 50 K/h, and a HDT Vicat 4U instrument (Emmeram Karg Industrietechnik, Germany).

Rheological oscillatory frequency sweep experiments are performed on compression-molded disks using a parallel-plate geometry at 210°C, oscillatory strain amplitude $\gamma_0$ = 10%, angular frequency $\omega$ = 389 to 0.1 rad/s, and a DHR-2 rheometer (TA Instruments, New Castle, USA). The cross-over modulus Gc = G' = G" is determined by a least squares fit. As measures of the width of the molecular weight distribution, several rheological parameters are calculated.

The rheological polydispersity index PI [-] is linked to the width of the molecular weight distribution and PDR [-] provides a measure of the strength of shear-thinning.

PI is calculated from the calculated cross-over modulus Gc:

$$PI\,[\text{-}] = \frac{10^5 \text{Pa}}{G_c}$$

$$PDR\,[-] = \frac{|\eta_1^*|}{|\eta_3^*|} \frac{[|\eta_1^*| \times |\eta_3^*|]^{0.5}}{|\eta_2^*|}$$

where $|\eta_1^*| = |\eta^*|$ at $|G^*| = 500$ Pa, $|\eta_2^*| = |\eta^*|$ at $|G^*| = 5000$ Pa, $|\eta_3^*| = |\eta^*|$ at $|G^*| = 50000$ Pa. All $|\eta^*|$ values are in "Poises".

Molecular weight properties are measured at 145 °C using a GPC-IR instrument (PolymerChar, Spain) equipped with an infrared detector (IR4) and a four capillary differential bridge viscometer, having a combination of three mixed-bed columns (Agilent/Polymer Labs PL gel 10 $\mu$m Mixed-B) and a guard column (Agilent/Polymer Labs PL gel 10 $\mu$m). Polymer solutions with concentration of 1.7 mg/ml are prepared in 1,2-dichlorobenzene (stabilized with 800 ppm 2,6-di-tert-butyl-p-cresol). The injection volume is 300 $\mu$l, and the solvent flow rate was 0.5 ml/min. The instrument is calibrated using ten polystyrene standard materials (ReadyCal Kit by PSS Polymer Standards Service GmbH, Germany). Based on the determined viscosity average molecular weights $M_v$ [g/mol] and intrinsic viscosities IV [dl/g], branching index g' [-] values are calculated:

$$g'\,[-] = \frac{IV}{K \times M_v^{\alpha}}$$

where K = 0.000262 dl/g, $\alpha$ = 0.705.

Elongational rheology experiments are conducted using a RG20 capillary rheometer in combination with a Rheotens apparatus (both from Göttfert Werkstoff-Prüfmaschinen GmbH, Germany). The capillary rheometer is used to extrude a polymer strand at 190°C through a LID = 40/2 capillary die. The Rheotens apparatus is positioned 100 mm below the die of the capillary rheometer and is employed for drawing of the extruded polymer strand and the recording of counteracting forces. The Rheotens apparatus consists of counter-rotating rollers that are connected to a balance beam in combination with a linear variable displacement transducer. The extruded polymer strand is grasped by the rollers and the initial take-up velocity is adjusted to the velocity of the extruded polymer strand. By increasing take-up velocity, the extruded strand is drawn, and increasing forces are recorded until the polymer strand breaks. The initial take-up velocity is $v_0$ = 14.4 mm/s and take-up acceleration is 30 mm/s$^2$. Draw ratios V are defined as the ratio between applied and initial take-up velocities (V = v/v$_0$). The smallest force recorded during the experiment is defined as $F_{min}$. The maximum force required to break the extrudate is defined as maximum melt strength $F_{max}$. To be able to compare experimental data for examples having different minimum and maximum melt strengths, the normalized melt strength $F_{norm}$ is defined as:

$$F_{norm}\,[-] = \frac{F(V) - F_{min}}{F_{max} - F_{min}}$$

where $F_{min}$ = smallest value, $F_{max}$ = largest value of the F(V) curve, respectively.

Examples 1-4

The Examples in Table 1 are examples of methods for producing a propylene polymer composition and the Examples in Table 2 are examples of the corresponding propylene polymer compositions respectively obtained by these methods.

The examples show the improved combination of properties of a propylene polymer composition produced by a method using dicetyl peroxydicarbonate as peroxide and 2,6 di-tert-butyl-p-cresol as hydrogen donor (Example IE-1), in accordance with embodiments of the present disclosure, compared to a corresponding propylene polymer composition produced by a conventional method using no peroxide at all (comparative Example CE-1), a corresponding propylene polymer produced by a conventional method using dicetyl peroxydicarbonate only (comparative Example CE-2) and a corresponding propylene copolymer produced by a conventional method using dicetyl peroxydicarbonate and vitamin E (comparative Example CE-3).

The propylene polymer used in Examples CE-1-CE-3 and IE-1, designated as PP-1 in Table 1, was the same propylene homopolymer powder. This propylene homopolymer powder was synthesized in a vertically-stirred Novolen® gas-phase reactor at 30 bar and 80°C using a stereospecific $MgCl_2$-xROH-supported Ziegler-Natta catalyst containing diisobutyl phthalate (DIBP) as internal donor. As external donor, isobutyl(isopropyl) dimethoxysilane was fed to the gas-phase reactor to increase isotacticity and to achieve a xylene soluble content (XS) of 2.5 wt% and a peak melting temperature of 162°C. Hydrogen was fed to the gas-phase reactor to control polymer molecular weight, and the feed rate was adjusted to achieve an MFR of about 2.7 g/10 min. The synthesized propylene homopolymer powder was collected, deactivated using an isopropanol/water mixture, and dried to yield a free-flowing polymer powder.

The propylene homopolymer powder was used in combination with compositions including one or more of the following additives as detailed in Table 1:

AO-1010: Pentaerythritol tetrakis[3-[3,5-di-tert-butyl-4-hydroxyphenyl] propionate (Irganox 1010, BASF, Germany)

AO-168: tris(2,4-di-tert-butylphenyl)phosphite (Irgafos 168, BASF, Germany)

Calcium Stearate (Ceasit AV FI, Baerlocher, Germany)

Vitamin E: 3,4-Dihydro-2,5,7,8-tetramethyl-2-(4,8,12-trimethyltridecyl)-2H-1-benzopyran-6-ol (Irganox E 201, BASF, Germany)

BHT: 2,6 di-tert-butyl-p-cresol (Sigma-Aldrich, USA),

Perkadox 24L: dicetyl peroxydicarbonate (Nouryon, Netherlands).

CE-1 is a comparative example, in which the propylene homopolymer powder was melt processed in the presence of a composition made of pentaerythritol tetrakis[3-[3,5-di-tert-butyl-4-hydroxyphenyl] propionate, tris(2,4-di-tert-butylphenyl)phosphite, and calcium stearate.

CE-2 is a comparative example, in which the propylene homopolymer powder was melt processed in the presence of a composition made of pentaerythritol tetrakis[3-[3,5-di-tert-butyl-4-hydroxyphenyl] propionate, tris(2,4-di-tert-butylphenyl)phosphite, calcium stearate, and dicetyl peroxydicarbonate.

CE-3 is a comparative example, in which the propylene homopolymer powder was melt processed in the presence of a composition made of pentaerythritol tetrakis[3-[3,5-di-tert-butyl-4-hydroxyphenyl] propionate, tris(2,4-di-tert-butylphenyl)phosphite, calcium stearate, dicetyl peroxydicarbonate and vitamin E.

IE-1 is an example in accordance with an embodiment of the present disclosure, in which the propylene homopolymer powder was melt processed in the presence of a composition made of pentaerythritol tetrakis[3-[3,5-di-tert-butyl-4-hydroxyphenyl] propionate (13.7 % by weight), tris(2,4-di-tert-butylphenyl)phosphite (13.7 % by weight), calcium stearate (3.4 % by weight), dicetyl peroxydicarbonate (68.3 % by weight), and 2,6 di-tert-butyl-p-cresol (1.0 % by weight).

The propylene homopolymer powder was extruded in the presence of the different compositions. Due to the presence of peroxide, the extrusion in Examples CE-2, CE-3 and IE-1 was a reactive extrusion.

**Table 1**

| Example | Polymer PP-1 [wt%] | AO-1010 [ppm] | AO-168 [ppm] | Calcium Stearate [ppm] | Vitamin E [ppm] | BHT [ppm] | Perkadox 24L [wt%] |
|---|---|---|---|---|---|---|---|
| CE-1 (comparative) | 99.75 | 1000 | 1000 | 500 | - | - | - |
| CE-2 (comparative) | 98.55 | 2000 | 2000 | 500 | - | - | 1.0 |
| CE-3 (comparative) | 98.54 | 2000 | 2000 | 500 | 150 | - | 1.0 |
| IE-1 (disclosure) | 98.54 | 2000 | 2000 | 500 | - | 150 | 1.0 |

Comparative Example CE-1, which was not treated with a peroxide, showed an unchanged MFR value of 2.7 g/10 min and physical properties that may be commonly found in a propylene homopolymer.

Upon reactive extrusion, Comparative Examples CE-2 and CE-3 and Example IE-1 in accordance with embodiments of the present disclosure showed different property profiles, as can be seen in Table 2.

In particular, Comparative Examples CE-2 and CE-3 showed a reduced MFR value and a broadened molecular weight distribution compared to that of CE-1, as shown by the higher PI values of Comparative Examples CE-2 and CE-3. Stiffness of Comparative Examples CE-2 and CE-3 was higher compared to the that of CE-1, as shown by the flexural modulus. The Vicat softening temperature VST of Comparative Examples CE-2 and CE-3 was comparable to that of Comparative Example CE-1.

Surprisingly, however, Example IE-1 in accordance with embodiments of the present disclosure showed a flexural modulus well above that of each of the Comparative Examples and an improved Vicat softening temperature VST over each of the Comparative Examples. Furthermore, Example IE-1 in accordance with embodiments of the present disclosure showed a molecular weight distribution broader than that of each of as Comparative Examples CE-1, CE-2, and CE-3.

**Table 2**

| Ex. | MFR [g/10 min] | PI [-] | PDR [-] | $M_v$ [g/mol] | IV [dl/g] | g' [-] | Flexural Modulus [MPa] | Tensile Strength [MPa] | VST (A50) [°C] |
|---|---|---|---|---|---|---|---|---|---|
| CE-1 | 2.7 | 4.0 | 21.4 | 322500 | 1.77 | 0.88 | 1577 | 34.7 | 155.1 |
| CE-2 | 0.5 | 8.0 | 128.2 | 379050 | 1.88 | 0.84 | 1698 | 37.0 | 155.6 |
| CE-3 | 0.5 | 7.9 | 127.0 | 378800 | 1.86 | 0.83 | 1724 | 37.2 | 155.3 |
| IE-1 | 0.5 | 8.4 | 138.4 | 384000 | 1.89 | 0.83 | 1827 | 38.6 | 157.3 |

Table 3 shows the results of elongational rheology experiments conducted on the polymer compositions of the Examples using a RG20 capillary rheometer in combination with a Rheotens apparatus (both from Göttfert Werkstoff-Prüfmaschinen GmbH, Germany). Comparative Example CE-1 showed a maximum melt strength $F_{max}$ of 8.9 cN, and low values for the normalized melt strength at low draw ratios, e.g., V = 2 or V = 3. Comparative examples CE-2 and CE-3 showed about ten times higher maximum melt strengths $F_{max}$, but even lower normalized melt strengths at low draw ratios, e.g., V = 2 or V = 3. Surprisingly, Example IE-1 in accordance with embodiments of the present disclosure showed higher normalized melt strengths at low draw ratios, e.g., V = 2 or V = 3 than those of Comparative Examples CE-2 and CE-3, while achieving a comparable maximum melt strength $F_{max}$. In other words, the observed melt strength for Example IE-1 increases faster and is therefore higher at low draw ratios than state-of-the-art propylene polymer compositions. This is beneficial, among others, for applications such as thermoforming, blow molding or foaming.

**Table 3**

| Example | $F_{max}$ [cN] | $F_{norm}$ [-] | | | % Increase compared to CE-1 | | | Performance-to-MFR ratio |
|---|---|---|---|---|---|---|---|---|
| | | V=2 | V=3 | V=4 | V=2 | V=3 | V=4 | |
| CE-1 | 8.9 | 0.14 | 0.48 | 0.85 | Ref. | Ref. | Ref. | 0.1 |
| CE-2 | 89 | 0.11 | 0.44 | 0.83 | -21.4% | -8.3% | -2.4% | 3.3 |
| CE-3 | 92 | 0.12 | 0.40 | 0.77 | -14.3% | -16.7% | -9.4% | 3.8 |
| IE-1 | 90 | 0.17 | 0.71 | 1.00 | 21.4% | 47.9% | 17.6% | 5.6 |

The improved combination of properties of Example IE-1 is also expressed by the higher value of the performance-to-MFR ratio defined by the following equation (1) shown by Example IE-1 when compared to the value of the performance-to-MFR ratio of each of the Comparative Examples:

$$\text{Performance} - \text{to} - \text{MFR ratio} = \frac{Flexural\ Modulus\ [MPa] \times F_{norm}(V=2)[-] \times F_{max}[cN]}{10000 \times MFR\left[\frac{g}{10min}\right]} \quad (1)$$

While in the absence of long-chain branching, Comparative Example CE-1 has a value close to 0, the propylene polymer composition of Example IE-1 exhibits a high flexural modulus, a high normalized melt strength $F_{norm}$ at low draw

ratios, and a high maximum melt strength $F_{max}$.

While the method and the polymer compositions have been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A method for producing a propylene polymer composition, comprising:

   melt processing a propylene polymer in the presence of a composition comprising:

   at least one hydrogen donor comprising a di-substituted p-cresol derivative,
   at least one peroxide comprising a peroxydicarbonate, and
   at least one polymer additive comprising at least one antioxidant,

   wherein the melt processing is performed under inert conditions.

2. The method of claim 1, wherein the di-substituted p-cresol derivative comprises a 2,6 di-alkyl-substituted p-cresol derivative.

3. The method of claim 1 or claim 2, wherein the peroxydicarbonate comprises a dialkyl peroxydicarbonate.

4. The method of any one of claims 1-3, wherein the at least one antioxidant is selected from the group comprising propionate-based phenolic antioxidants, amine antioxidants, phosphite antioxidants, phosphonite antioxidants, benzofuranone antioxidants, thiodipropionate antioxidants, acryloyl antioxidants, and combinations thereof.

5. The method of any one of claims 1-4, wherein the at least one polymer additive further comprises at least one acid scavenger selected from the group comprising metallic stearates, hydrotalcites, hydrocalumites, metallic oxides, metallic carbonates, and combinations thereof.

6. The method of any one of claims 1-5, wherein the propylene polymer is selected from the group comprising propylene homopolymers and copolymers of propylene and at least one alpha-olefin.

7. The method of any one of claims 1-6, wherein the melt processing is performed at a temperature lower than 300°C.

8. The method of any one of claims 1-7, wherein the melt processing comprises any one of extruding, mixing, blending, calendaring, and combinations thereof.

9. The method of any of claims 1-8, wherein the method further comprises feeding the composition and the propylene polymer in a melt processing device, mixing the propylene polymer and the composition to obtain a mixture, and melting the mixture.

10. The method of any one of claims 1-9, wherein the inert conditions include absence of oxygen or presence of an inert gas.

11. The method of any one of claims 1-10, wherein the method further comprises applying an under-atmospheric pressure.

12. A propylene polymer composition comprising:

   from 95.0 to 99.9 % by weight of one or more propylene polymers,
   from 50 to 1000 ppm of one or more hydrogen donors comprising a di-substituted p-cresol derivative, and
   from 200 to 49000 ppm of one or more polymer additives comprising at least one antioxidant,
   wherein the propylene polymer composition has a performance-to-MFR ratio $\geq 3.9$,
   where the performance-to-MFR ratio is defined by the following equation (1):

$$\text{Performance} - \text{to} - \text{MFR ratio} = \frac{Flexural\ Modulus\ [MPa] \times F_{norm}(V = 2)[-] \times F_{max}[cN]}{10000 \times MFR \left[\frac{g}{10min}\right]} \qquad (1),$$

the flexural modulus is determined on injection-molded test specimen conditioned for 7 days at 23°C and 50% relative humidity, in accordance with ISO 178,

$F_{norm}$ is the normalized melt strength determined on a capillary rheometer in combination with a Rheotens apparatus by Göttfert Werkstoff-Prüfmaschinen GmbH, Germany, by extruding a polymer strand at 190°C through a capillary die and by drawing the extruded strand until the polymer strand breaks, $F_{norm}$ being defined by the following equation (2):

$$F_{norm}\ [-] = \frac{F(V) - F_{min}}{F_{max} - F_{min}} \qquad (2),$$

$F_{min}$ and $F_{max}$ are the minimum and maximum melt strength values, respectively,

F(V) is the melt strength,

V is the draw ratio defined as $V = v/v_0$,

$v_0$ is the initial take-up velocity,

v is the applied take-up velocity, and

MFR is the melt mass-flow rate as determined in accordance with ISO 1133 at 230°C and a load of 2.16 kg.

13. The propylene polymer composition of claim 12, wherein the performance-to-MFR ratio is from 3.9 to 25.

14. The propylene polymer composition of claim 12 or claim 13, wherein the flexural modulus is at least equal to 1750 MPa.

15. The propylene polymer composition of any one of claims 12-14, wherein the MFR is from 0.1 g/10 min to 15 g/10 min.

16. A propylene polymer composition comprising:

from 95.0 to 99.9 % by weight of one or more propylene polymers,
from 50 to 1000 ppm of one or more hydrogen donors comprising a di-substituted p-cresol derivative, and
from 200 to 49000 ppm of one or more polymer additives comprising at least one antioxidant,
wherein the propylene polymer composition has:

a g' <_ 1.0,
a PI ≥ 6.0, and
a flexural modulus ≥ 1750 Pa,
where

g' is the branching index determined by performing calibrated GPC measurements of polymer solutions in 1,2-dichlorobenzene at 145°C,
g' is defined by the following equation (3):

$$g'\ [-] = \frac{IV}{K \times M_v^{\alpha}} \qquad (3)$$

where

IV is the intrinsic viscosity,
K = 0.000262 dl/g,
$M_v$ is the viscosity average molecular weight, and
α = 0.705,

PI is the rheological polydispersity index determined by performing rheological oscillatory frequency sweep experiments on compression-molded disks using a parallel-plate geometry at 210°C, PI being defined by the following equation (4):

$$PI \, [\text{-}] = \frac{10^5 \text{Pa}}{G_c} \qquad (4)$$

where

Gc is the cross-over modulus Gc = G' = G" determined by a least squares fit,
G' is the storage modulus, and
G" is the loss modulus, and

the flexural modulus is determined on injection-molded test specimen conditioned for 7 days at 23°C and 50% relative humidity, in accordance with ISO 178.

17. Use of the propylene polymer composition of any one of claims 12-16 for reducing sagging in thermoformed articles, reducing parison sagging and increasing uniformity in blow-molded articles, and increasing uniformity of cells in foamed articles.

18. An article comprising the propylene polymer composition of any one of claims 12-16.

FIG. 1

**FIG. 2**

**FIG. 3**

**EP 4 674 872 A1**

## EUROPEAN SEARCH REPORT

**Application Number**

EP 24 18 6248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2016/126430 A1 (EXXONMOBIL CHEM PATENTS INC [US]) 11 August 2016 (2016-08-11) <br> * paragraphs [0047], [59ff.] * <br> * table 1 * <br> * claims 1-25 * | 1-18 | INV. <br> C08F8/50 <br> C08F110/06 <br> C08K5/13 <br> C08K5/14 <br> C08K5/134 |
| A | US 2020/223956 A1 (FRIJLINK WILHELM KLAAS [NL] ET AL) 16 July 2020 (2020-07-16) <br> * paragraphs [0045], [0047] * <br> * table 1 * <br> * claims 1-17 * | 1-18 | C08K5/00 |
| A | CN 103 524 682 A (UNIV ZHEJIANG) 22 January 2014 (2014-01-22) <br> * examples 22-24 * <br> * claims 1-9 * | 1-18 | |
| A | EP 0 864 589 A2 (CHISSO CORP [JP]) 16 September 1998 (1998-09-16) <br> * Comparative Example 47; example 104 * <br> * claims 1-43 * | 1-18 | |
| A | KR 2020 0056071 A (HANWHA TOTAL PETROCHEMICAL CO LTD [KR]) 22 May 2020 (2020-05-22) <br> * example 1 * <br> * claims 1-13 * | 1-18 | **TECHNICAL FIELDS SEARCHED (IPC)** <br><br> C08F <br> C08K <br> C08L |

The present search report has been drawn up for all claims

| Place of search | Date of completion of the search | Examiner |
|---|---|---|
| Munich | 12 December 2024 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6248

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | Publication date | Patent family member(s) | Publication date |
|---|---|---|---|
| WO 2016126430 A1 | 11-08-2016 | BR 112017019656 A2 | 06-11-2018 |
| | | CN 107396636 A | 24-11-2017 |
| | | EP 3253820 A1 | 13-12-2017 |
| | | KR 20170126104 A | 16-11-2017 |
| | | US 2018051160 A1 | 22-02-2018 |
| | | WO 2016126430 A1 | 11-08-2016 |
| US 2020223956 A1 | 16-07-2020 | BR 112020003750 A2 | 01-09-2020 |
| | | CN 111051410 A | 21-04-2020 |
| | | EP 3673010 A1 | 01-07-2020 |
| | | ES 2906282 T3 | 18-04-2022 |
| | | JP 7227225 B2 | 21-02-2023 |
| | | JP 2020531652 A | 05-11-2020 |
| | | KR 20200042520 A | 23-04-2020 |
| | | PL 3673010 T3 | 21-02-2022 |
| | | TW 201920431 A | 01-06-2019 |
| | | US 2020223956 A1 | 16-07-2020 |
| | | WO 2019038244 A1 | 28-02-2019 |
| CN 103524682 A | 22-01-2014 | NONE | |
| EP 0864589 A2 | 16-09-1998 | AU 7710896 A | 27-06-1997 |
| | | CN 1196066 A | 14-10-1998 |
| | | EP 0864589 A2 | 16-09-1998 |
| | | JP 3270056 B2 | 02-04-2002 |
| | | KR 19990028674 A | 15-04-1999 |
| | | US 6437048 B1 | 20-08-2002 |
| | | WO 9720869 A1 | 12-06-1997 |
| KR 20200056071 A | 22-05-2020 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9927007 A1
- WO 2016126429 A1
- WO 2016126430 A1
- WO 2016164111 A1
- WO 2015200586 A1
- WO 2021001175 A1

**Non-patent literature cited in the description**

- **PASQUINI, N**. Polypropylene Handbook. 2005
- **PAULIK, CHRISTIAN et al.** *Macromol. Chem. Phys.*, 2021, vol. 222, 2100302
- **A. D. GOTSIS et al.** Effect of long chain branching on the processability of polypropylene in thermoforming. *Polymer Engineering and Science*, May 2004, vol. 44 (5), 973
- **ZWEIFEL, H.** Plastics Additives Handbook. 2009